# FASCICULE DE BREVET EUROPEEN

(11) **EP 4 021 708 B1**
(45) Date de publication et mention de la délivrance du brevet: **21.06.2023**
(21) Numéro de dépôt: 20775038.1
(22) Date de dépôt: 24.08.2020
(51) Int. Cl.: B29C 70/22, B29C 70/32, B32B 27/12, B29C 53/60, B29L 31/00, B29C 35/08, B29L 31/30, F01D 21/04, F02C 7/04, F02C 7/25, B29C 53/56, B29C 70/00

(54) **PROCEDE DE FABRICATION D'UN CARTER ANNULAIRE POUR UNE TURBOMACHINE D'AERONEF**
VERFAHREN ZUR HERSTELLUNG EINES RINGFÖRMIGEN GEHÄUSES FÜR EINEN FLUGZEUGTURBINENMOTOR
METHOD FOR PRODUCING AN ANNULAR CASING FOR AN AIRCRAFT TURBINE ENGINE

(30) Priorité: 28.08.2019 FR 1909462
(43) Date de publication de la demande: 06.07.2022
(73) Titulaire: SAFRAN AIRCRAFT ENGINES, 75015 Paris (FR)
(72) Inventeur: BLAISE, Maxime, Marie, Désiré, 77550 MOISSY-CRAMAYEL (FR); FABRE, Hubert, Jean, Marie, 77550 MOISSY-CRAMAYEL (FR)
(74) Mandataire: Gevers & Orès
(86) Numéro de dépôt international: PCT/FR2020/051493
(87) Numéro de publication internationale: WO 2021/038164

(56) Documents cités:
- WO-A1-2019/013239
- US-A1- 2009 022 579
- US-A1- 2009 098 337
- US-A1- 2015 239 181

## Description

### Domaine technique de l'invention

La présente invention concerne un procédé de fabrication d'un carter annulaire pour une turbomachine d'aéronef.

### Arrière-plan technique

L'arrière-plan technique comprend notamment les documents US-A1-2015/239181, US-A1 -2009/098337 et WO-A1-2019/013239.

Le document US2009/022579 A1 décrit un article composite résistant aux brûlures comprenant au moins une couche composite comprenant des premières fibres dans une première matrice de résine organique, la couche composite ayant une première résistance thermique ; et au moins une couche de résistance à la combustion adjacente à la au moins une couche composite et comprenant des secondes fibres dans une seconde matrice de résine organique, la couche de résistance à la combustion ayant une seconde résistance thermique qui est supérieure à la première résistance thermique de la couche composite.

Une turbomachine d'aéronef comprend plusieurs carters annulaires. Pour alléger un carter, il est connu de le réaliser dans un matériau composite. Dans la présente demande, on entend par matériau composite, un matériau comportant des charges telles que des fibres noyées dans une matrice polymérique. La matrice polymérique est en général une résine.

Un carter de soufflante peut par exemple être réalisé en matériau composite. Ce carter entoure la soufflante de la turbomachine et doit répondre à un cahier des charges nécessaire à sa certification notamment en ce qui concerne sa tenue au feu.

La résine utilisée pour la fabrication du carter de soufflante est choisie pour ses propriétés mécaniques mais est inflammable dans la technique actuelle et il est donc nécessaire de recouvrir la surface supérieure du carter d'une couche anti-feu.

Des solutions existent mais ne sont pas entièrement satisfaisantes en particulier car elles sont longues et complexes à mettre en oeuvre.

L'invention propose de remédier à cet inconvénient.

### Résumé de l'invention

L'invention propose ainsi un procédé de fabrication d'un carter annulaire pour une turbomachine d'aéronef, ce carter comportant un corps annulaire en matériau composite à base d'une première résine, et une couche externe anti-feu qui recouvre une surface annulaire externe du corps et qui est réalisée en matériau composite à base d'une seconde résine auto-extinguible, caractérisé en ce qu'il comprend :
a) une étape de préparation d'une bande d'un tissu préimprégnée avec ladite seconde résine, cette bande ayant une forme allongée le long d'un axe d'allongement et une largeur au moins égale et de préférence supérieure à une largeur dudit corps mesurée le long de son axe de révolution, cette bande comportant des fibres tissées et orientées dans des directions perpendiculaires entre elles et inclinées d'un angle de 45° environ par rapport audit axe d'allongement, et
b) une étape d'application de la bande sur la surface externe du corps, de façon à recouvrir l'intégralité de cette surface en une seule passe de la bande autour du corps.

L'invention propose d'utiliser une résine auto-extinguible et de préimprégner une bande de tissu avec cette résine qui est ensuite déposée tout autour du corps du carter.

La bande est réalisée par tissage de fibres de verre ou carbone par exemple. Ces fibres sont orientées dans des directions particulières qui vont faciliter le décadrage de la bande lors de sa pose sur le corps.

En effet, la surface extérieure du corps du carter peut avoir un relief marqué. Lors de l'application de la bande, il est important que cette bande épouse ce relief sans créer de bulles d'air par exemple. Les fibres orientées à 90° les unes des autres et à 45° de l'axe d'allongement de la bande vont pouvoir plus facilement glisser les unes sur les autres et faciliter le décadrage de la bande. Le corps est avantageusement entouré par une unique bande. Cette bande s'étend sur tout le pourtour du corps et a une largeur au moins égale à celle du corps.

L'invention permet en outre de lutter contre la corrosion galvanique du carter lorsqu'il est réalisé dans un assemblage composite / métallique.

Le procédé selon l'invention peut comprendre une ou plusieurs des caractéristiques suivantes, prises indépendamment les unes des autres ou en combinaison les unes avec les autres :
- la bande est enroulée et se présente sous la forme d'un rouleau à la fin de l'étape a), ce rouleau étant disposé sur un côté du corps à l'étape b), et le corps et le rouleau étant mis en rotation autour de leurs axes respectifs pendant l'étape b) ;
- le corps est mis en rotation à l'étape b) par l'intermédiaire de galets prenant appui sur la surface externe et/ou sur une surface interne du corps ;
- à l'étape b), l'axe de rotation du rouleau est incliné d'un angle prédéterminé par rapport à au moins un plan passant par l'axe de révolution du corps ;
- à l'étape b), au moins un rouleau de compactage est utilisé pour appliquer la bande sur la surface externe du corps ;
   Procédé selon la revendication 5, dans lequel plusieurs rouleaux de compactage sont répartis le long de l'axe de révolution du corps et ont des profils complémentaires au relief de la surface externe du corps ;
- les rouleaux de compactage comprennent chacun au moins une couche annulaire externe de mousse, les couches de mousse d'au moins certains des rouleaux ayant des rigidités différentes. ;
- à l'étape b), des paramètres sont asservis et comprennent une tension de la bande dans ladite direction, et une pression de contact de la ou de chaque rouleau de compactage ;
- des éléments chauffants, tels que des lampes infrarouge, des torches plasma ou laser, etc., sont disposés en amont et en aval dudit au moins un rouleau de compactage, par rapport au sens d'enroulement de la bande sur le corps ;
- des dévideurs de films sont disposés sous et sur la bande lors de son déroulement, ces dévideurs étant configurés pour retirer des films de protection présents sur les deux faces de la bande.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est un organigramme montrant des étapes d'un procédé selon l'invention,
[Fig. 2] la figure 2 est une vue très schématique en perspective d'une bande de tissu préimprégné utilisée dans le procédé selon l'invention,
[Fig. 3] la figure 3 est une vue très schématique en perspective d'un corps de carter et de galets de mise en rotation de ce corps, pour la mise en oeuvre du procédé selon l'invention,
[Fig. 4] la figure 4 illustre de manière schématique une étape du procédé selon l'invention,
[Fig. 5] la figure 5 illustre de manière schématique l'étape du procédé de la figure 4, et
[Fig. 6] la figure 6 est une vue très schématique partielle en coupe axiale d'un carter et de rouleaux de compactage, pour la mise en oeuvre du procédé selon l'invention.

### Description détaillée de l'invention

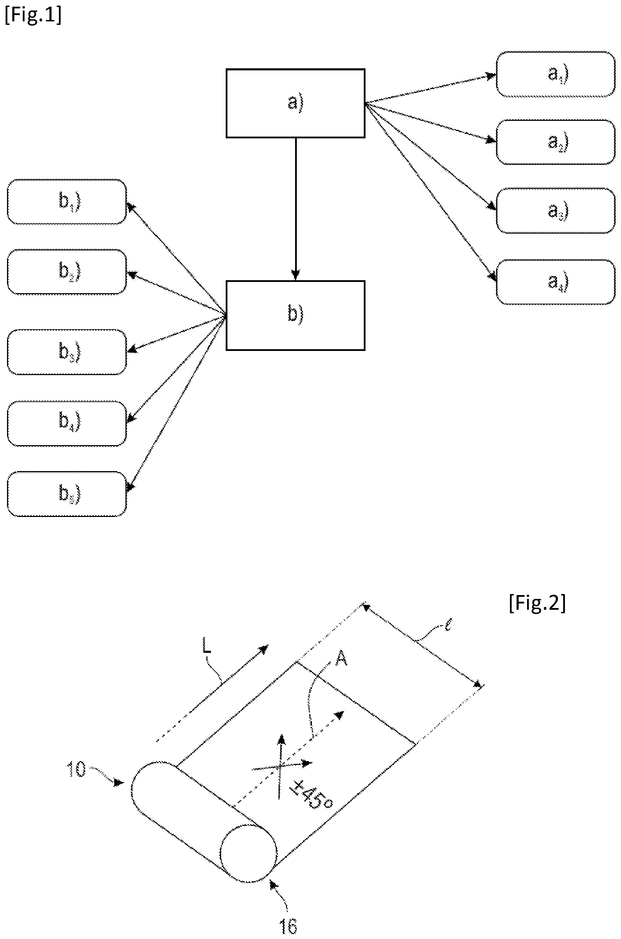

La figure 1 représente de manière très schématique des étapes d'un procédé selon l'invention de fabrication d'un carter annulaire pour une turbomachine d'aéronef.

Ce carter est par exemple un carter de soufflante.

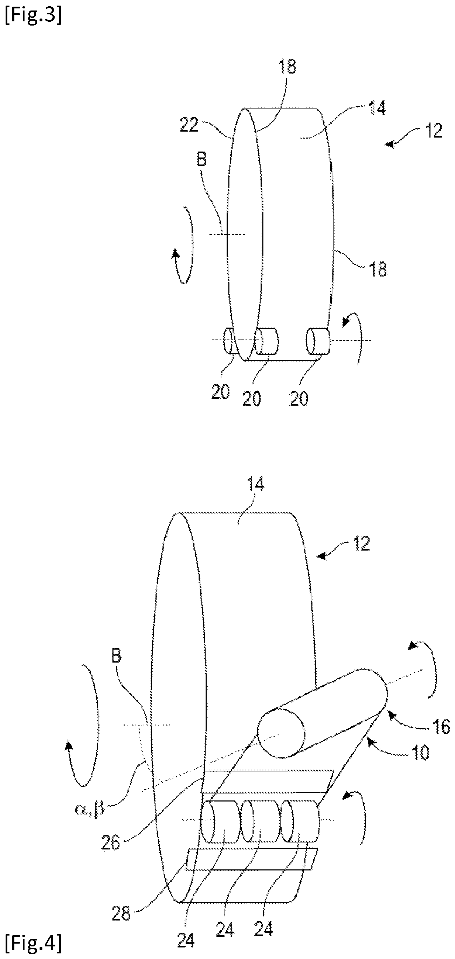

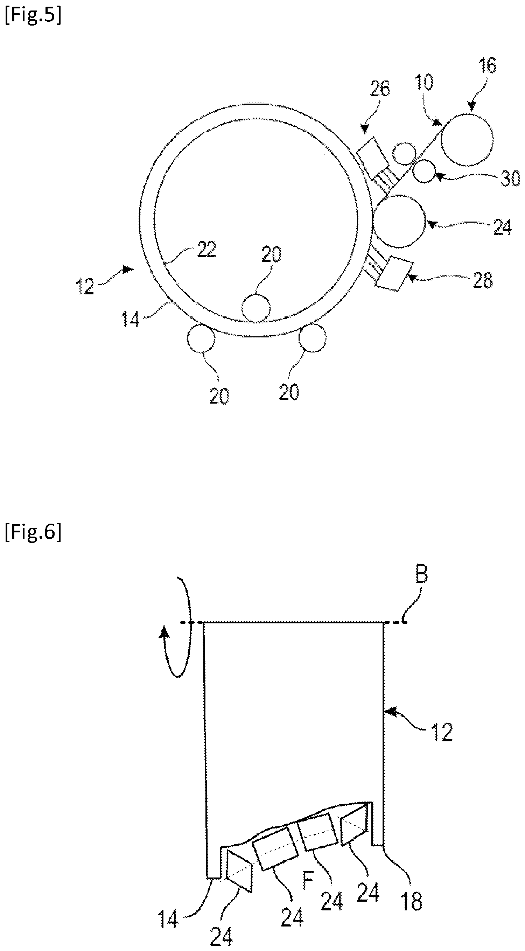

Le procédé comprend pour l'essentiel deux étapes, à savoir une étape a) de préparation d'une bande de tissu préimprégné 10 (figure 2), et une étape b) d'application de cette bande 10 sur la surface externe 14 d'un corps 12 du carter (figures 4 et 5).

La première étape a) de fabrication de la bande 10 peut être divisée en plusieurs sous étapes successives. Elle peut comprendre une première sous étape a1) de fabrication de la bande de tissu. Pour cela, un métier à tisser peut par exemple être utilisé pour réaliser la bande de tissu à partir de fibres, de préférence de verre. Les fibres de verre forment des fils de trame et de chaîne du tissu et sont destinées à être orientées à 90° l'une de l'autre et à 45° environ par rapport à un axe d'allongement A de la bande, comme cela est schématiquement illustré à la figure 2.

La bande 10 a une largeur *ℓ* et une longueur L et sa longueur (plus grande dimension) s'étend le long de l'axe d'allongement A.

La première étape a) peut comprendre une autre sous étape a2) d'imprégnation de la bande avec une résine auto-extinguible qui est par exemple la résine M26T^{®} commercialisée par la société Hexcel La première étape a) peut comprendre une autre sous étape a3) de disposition d'un film de protection sur chacune des faces de la bande. Enfin, lors d'une autre sous-étape a4), la bande 10 peut être enroulée sur elle-même ou sur un axe pour former un rouleau 16 plus facile à manipuler (figure 2).

De la même façon, la deuxième étape b) peut comprendre plusieurs sous-étapes successives.

La première sous-étape b1) consiste à mettre en rotation le corps 12 du carter, comme illustré à la figure 3. Le corps 12 est en matériau composite à base d'une résine différente de la résine d'imprégnation de la bande. La résine du corps 12 est choisie pour ses propriétés mécaniques et peut être la résine CYCOM^{®} PR 520 commercialisée par la société Solvay (anciennement Cytec).

Le corps 12 du carter a une forme générale annulaire autour d'un axe de révolution B et peut comprendre une bride annulaire 18 de fixation à chacune de ses extrémités axiales.

Le corps 12 du carter est mis en rotation par l'intermédiaire de galets à la figure 3. Pour cela le corps 12 peut être disposé sur des galets 20 qui prennent appui sur la surface externe 14 du corps. Des galets 20 peuvent en outre être disposés à l'intérieur du corps et prendre appui sur une surface interne 22 du corps. Les galets 20 sont motorisés de façon à asservir la vitesse de rotation du corps de carter 12.

Dans la présente demande, on entend par les expressions interne et externe ou intérieure ou extérieure des positions par rapport à l'axe B de révolution du carter ou de son corps 14.

Lors de la deuxième étape b), le rouleau de bande 16 est disposé à côté du corps 12 mobile en rotation. Le rouleau 16 est lui-même mis en rotation (sous-étape b2)) autour de son axe pour dérouler la bande 10 et l'appliquer avec une certaine tension sur la surface externe 14 du corps 12. Le rouleau 16 est monté sur un dérouleur motorisé de façon à asservir sa vitesse de rotation.

Comme on le voit dans les dessins, la largeur ℓ de la bande 10 est de préférence supérieure à la largeur du corps 12. On comprend donc qu'une seul passe de la bande 10 tout autour du corps 12 suffit à recouvrir l'intégralité de la surface externe 14 du corps.

Dans l'exemple représenté, le corps 12 du carter et le rouleau 16 tournent dans des sens contraires.

Dans l'exemple représenté à la figure 4, l'axe du rouleau 16 est incliné d'un premier angle α prédéterminé par rapport à un plan horizontal passant par l'axe B et d'un second angle β prédéterminé par rapport à un plan vertical passant par cet axe B.

La figure 4 permet en outre de voir que cette inclinaison permet par exemple d'accentuer la tension de la bande 10 sur un côté, par exemple le côté amont du carter, par rapport au côté aval, afin de faciliter le décadrage de la bande. La bande 10 déroulée s'étend depuis le rouleau 16 jusqu'à la surface externe 14 du corps 12 du carter et elle est appliquée sur cette surface en exerçant une pression au moyen de rouleaux de compactage 24.

Avantageusement, les rouleaux de compactage 24 s'étendent le long de l'axe B et ont des profils complémentaires au relief de la surface externe 14 du corps 12 (figure 6).

Les pressions F exercées par les rouleaux 24 sur la bande 10 et le corps 12 sont de préférence gérées et réglées indépendamment les unes des autres (sous-étape b3)). Les rouleaux de compactage 24 comprennent chacun au moins une couche annulaire externe de mousse. Les couches de mousse d'au moins certains des rouleaux 24 ont de préférence des rigidités différentes. Les mousses permettent aux rouleaux 24 de s'adapter à la forme évolutive du corps 12 et au taux de décadrage résultant. Ils sont par exemple à la forme des rayons des brides 18 aux deux extrémités du corps 12 afin de permettre le drapage dans le fond des rayons de ces brides.

Les paramètres de tension de la bande 10 et de pression de contact des rouleaux de compactage 24 peuvent être asservis.

Des lampes infrarouges 26, 28 sont disposées en amont et en aval des rouleaux de compactage, par rapport au sens d'enroulement de la bande 10 sur le corps 12. La lampe amont 26 permet de chauffer la bande 10 avant sa pose et la lampe aval 28 permet de chauffer simultanément la bande 10 et le corps 12. Ceci permet de faciliter l'adhésion de la bande sur la surface externe 14 du corps 12 (sous-étape b4)).

Des dévideurs 30 de films sont disposés sous et sur la bande 10 lors de son déroulement. Ces dévideurs 30 sont configurés pour retirer les films de protection présents sur les deux faces de la bande, avant son application sur le corps 12 du carter (sous-étape b5)).

## Revendications

1. Procédé de fabrication d'un carter annulaire pour une turbomachine d'aéronef, ce carter comportant un corps annulaire (12) en matériau composite à base d'une première résine, et une couche externe anti-feu qui recouvre une surface annulaire externe (14) du corps et qui est réalisée en matériau composite à base d'une seconde résine auto-extinguible, tel qu'il comprend :
a) une étape de préparation d'une bande (10) d'un tissu préimprégnée avec ladite seconde résine, cette bande ayant une forme allongée le long d'un axe d'allongement (A) et une largeur (e) au moins égale et de préférence supérieure à une largeur dudit corps mesurée le long de son axe de révolution (B), cette bande comportant des fibres tissées et orientées dans des directions perpendiculaires entre elles et inclinées d'un angle de 45° environ par rapport audit axe d'allongement, et
b) une étape d'application de la bande sur la surface externe du corps, de façon à recouvrir l'intégralité de cette surface en une seule passe de la bande autour du corps.

2. Procédé selon la revendication 1, dans lequel la bande (10) est enroulée et se présente sous la forme d'un rouleau (16) à la fin de l'étape a), ce rouleau étant disposé sur un côté du corps (12) à l'étape b), et le corps et le rouleau étant mis en rotation autour de leurs axes respectifs pendant l'étape b).

3. Procédé selon la revendication 2, dans lequel le corps (12) est mis en rotation à l'étape b) par l'intermédiaire de galets (20) prenant appui sur la surface externe (14) et/ou sur une surface interne (22) du corps.

4. Procédé selon la revendication 2 ou 3, dans lequel, à l'étape b), l'axe de rotation du rouleau (16) est incliné d'un angle (α, β) prédéterminé par rapport à au moins un plan passant par l'axe (B) de révolution du corps.

5. Procédé selon l'une des revendications précédentes, dans lequel, à l'étape b), au moins un rouleau de compactage (24) est utilisé pour appliquer la bande (10) sur la surface externe (14) du corps (12).

6. Procédé selon la revendication 5, dans lequel plusieurs rouleaux de compactage (24) sont répartis le long de l'axe (B) de révolution du corps (12) et ont des profils complémentaires au relief de la surface externe (14) du corps.

7. Procédé selon la revendication 6, dans lequel les rouleaux de compactage (24) comprennent chacun au moins une couche annulaire externe de mousse, les couches de mousse d'au moins certains des rouleaux ayant des rigidités différentes.

8. Procédé selon l'une des revendications 5 à 7, dans lequel, à l'étape b), des paramètres sont asservis et comprennent une tension de la bande (10) dans ladite direction, et une pression de contact de la ou de chaque rouleau de compactage (24).

9. Procédé selon l'une des revendications 5 à 8, dans lequel des éléments chauffants, tels que des lampes infrarouge (26, 28), sont disposés en amont et en aval dudit au moins un rouleau de compactage (24), par rapport au sens d'enroulement de la bande (10) sur le corps (12).

10. Procédé selon l'une des revendications précédentes, dans lequel des dévideurs de films (30) sont disposés sous et sur la bande (10) lors de son déroulement, ces dévideurs étant configurés pour retirer des films de protection présents sur les deux faces de la bande.

## Patentansprüche

1. Verfahren zur Herstellung eines ringförmigen Gehäuses für eine Turbomaschine eines Flugzeugs, wobei dieses Gehäuse einen ringförmigen Körper (12) aus einem Verbundmaterial auf Basis eines ersten Harzes und eine feuerbeständige Außenschicht umfasst, die eine ringförmige Außenfläche (14) des Körpers bedeckt und die aus einem Verbundmaterial auf Basis eines zweiten, selbst löschbarem Harzes ausgeführt ist, wobei es umfasst:
a) einen Schritt des Vorbereitens einer Bahn (10) aus einem mit dem zweiten Harz vorab imprägnierten Gewebe, wobei diese Bahn eine längliche Form entlang einer Verlängerungsachse (A) und eine Länge (ℓ) mindestens gleich und vorzugsweise größer als eine Breite des Körpers, die entlang seiner Drehachse (B) gemessen wird, aufweist, wobei diese Bahn Fasern umfasst, die gewebt sind und in Richtungen senkrecht zueinander ausgerichtet sind und in einem Winkel von etwa 45° in Bezug auf die Verlängerungsachse geneigt sind, und
b) einen Schritt des Anbringens der Bahn auf der Außenfläche des Körpers auf solche Weise, dass die Gesamtheit dieser Fläche in einem einzigen Umlauf der Bahn um den Körper herum bedeckt wird.

2. Verfahren nach Anspruch 1, wobei die Bahn (10) aufgewickelt wird und sich am Ende des Schritts a) in Form einer Walze (16) darstellt, wobei diese Walze im Schritt b) auf einer Seite des Körpers (12) angeordnet wird, und der Körper und die Walze im Schritt b) um ihre jeweiligen Achsen in Drehung versetzt werden.

3. Verfahren nach Anspruch 2, wobei der Körper (12) mithilfe von Laufrollen (20), die auf der Außenfläche (14) und/oder auf einer Innenfläche (22) des Körpers aufliegen, im Schritt b) in Drehung versetzt wird.

4. Verfahren nach Anspruch 2 oder 3, wobei im Schritt b) die Drehachse der Walze (16) um einen in Bezug auf mindestens eine Ebene, die durch die Drehachse (B) des Körpers verläuft, um einen vorbestimmten Winkel (α, β) geneigt ist.

5. Verfahren nach einem der vorstehenden Ansprüche, wobei im Schritt b) mindestens eine Verdichtungswalze (24) verwendet wird, um die Bahn (10) auf der Außenfläche (14) des Körpers (12) anzubringen.

6. Verfahren nach Anspruch 5, wobei mehrere Verdichtungswalzen (24) entlang der Drehachse (B) des Körpers (12) verteilt sind und zum Relief der Außenfläche (14) des Körpers komplementäre Profile aufweisen.

7. Verfahren nach Anspruch 6, wobei die Verdichtungswalzen (24) jeweils mindestens eine ringförmige äußere Schaumstoffschicht umfassen, wobei die Schaumstoffschichten mindestens gewisser der Walzen unterschiedliche Steifigkeiten aufweisen.

8. Verfahren nach einem der Ansprüche 5 bis 7, wobei im Schritt b) Parameter eingestellt werden und eine Spannung der Bahn (10) in der Richtung und einen Druckkontakt der oder jeder Verdichtungswalze (24) umfassen.

9. Verfahren nach einem der Ansprüche 5 bis 8, wobei Heizelemente, wie etwa Infrarotlampen (26, 28), in Bezug auf die Wicklungsrichtung der Bahn (10) auf dem Körper (12) stromaufwärts und stromabwärts der mindestens einen Verdichtungswalze (24) angeordnet sind.

10. Verfahren nach einem der vorstehenden Ansprüche, wobei Filmspulen (30) unter und auf der Bahn (10) während ihrer Abwicklung angeordnet sind, wobei diese Spulen konfiguriert sind, um auf den beiden Seiten der Bahn vorhandene Schutzfilme abzuziehen.

## Claims

1. A method for producing an annular casing for an aircraft turbine engine, this casing comprising an annular body (12) made from a composite material based on a first resin, and a fire-resistant external layer which covers an external annular surface (14) of the body and which is made from a composite material based on a self-extinguishing second resin, such that it comprises:
a) a step of preparing a strip (10) of a fabric pre-impregnated with said second resin, this strip having an elongated shape along an axis of elongation (A) and a width (ℓ) at least equal to and preferably greater than a width of said body measured along its axis of revolution (B), this strip comprising fibres woven and oriented in directions perpendicular to one another and inclined by an angle of about 45° with respect to said axis of elongation; and
b) a step of applying the strip on the external surface of the body, so as to cover the entirety of this surface in a single pass of the strip around the body.

2. The method according to claim 1, wherein the strip (10) is wound and is in the form of a roll (16) at the end of the step a), this roll being arranged on one side of the body (12) in the step b), and the body and the roll being rotated about their respective axes during the step b).

3. The method according to claim 2, wherein the body (12) is rotated in the step b) by means of rollers (20) resting on the external surface (14) and/or on an internal surface (22) of the body.

4. The method of claim 2 or 3, wherein in the step b), the axis of rotation of the roll (16) is inclined by a predetermined angle (α, β) with respect to at least one plane passing through the axis (B) of revolution of the body.

5. The method according to any of the preceding claims, wherein in the step b), at least one compaction roll (24) is used to apply the strip (10) to the external surface (14) of the body (12).

6. The method according to claim 5, wherein a plurality of compaction rolls (24) are distributed along the axis (B) of revolution of the body (12) and have profiles complementary to the relief of the external surface (14) of the body.

7. The method of claim 6, wherein the compaction rolls (24) each comprise at least one external annular layer of foam, the foam layers of at least some of the rolls having different stiffnesses.

8. The method according to any of claims 5 to 7, wherein in the step b), parameters are controlled and comprise a tension of the strip (10) in said direction, and a contact pressure of the or each compaction roll (24).

9. The method according to one of claims 5 to 8, wherein heating elements, such as infrared lamps (26, 28), are arranged upstream and downstream of said at least one compaction roll (24), with respect to the winding direction of the strip (10) on the body (12).

10. The method according to one of the preceding claims, wherein film unwinders (30) are arranged under and on the strip (10) as it is unwound, these unwinders being configured to remove protective films present on both faces of the strip.
